# DEMANDE DE BREVET EUROPEEN

(11) **EP 1 967 058 A1**
(43) Date de publication de la demande: **10.09.2008**
(21) Numéro de dépôt: 08102209.7
(22) Date de dépôt: 03.03.2008
(51) Int. Cl.: A01D 34/66, A01D 34/73

(54) **Broyeur de paille à six rotors à axes verticaux disposés en ligne**

(30) Priorité: 05.03.2007 FR 0701667
(71) Demandeur: Quenard, Alain, 52330 Gillancourt (FR)
(72) Inventeur: Quenard, Alain, 52330 Gillancourt (FR)
(74) Mandataire: Delprat, Olivier

(57) **Abrégé**

L'invention concerne un dispositif qui permet de broyer les pailles et végétaux avec une très bonne répartition sur le sol et permet aussi d'affiner la qualité du broyage.

Il est constitué de six rotors (10) entraînés et fixés à six boîtiers (3) à axes verticaux disposés sur une même ligne droite (15) perpendiculaires au sens d'avancement du tracteur (9). Les boîtiers sont fixés sur trois châssis, un central (5) et deux autres placés à chacune des deux extrémités (6).

Le sens de rotation des six rotors (10) est opposé deux par deux et synchronisé pour permettre aux couteaux (12) de pouvoir se croiser sans heurter.

La projection du produit se fait au centre de chacun des châssis en trois zones équilibrées (14).

## Description

Actuellement les broyeurs de paille et végétaux à axes verticaux sont positionnés en V toujours avec un nombre impair de rotors, c'est-à-dire 3 ou 5 rotors exemple définis dans les documents FR 2.820.606 et US 5.113.640 Le gros problème de ces machines est la répartition de la paille sur le sol, elle est mauvaise car quelque soit le sens de rotations des rotors, la projection n'est pas équilibrée. Elle est très peu améliorée par une tôle de guidage du produit placée sur le pourtour du rotor central et donc peu efficace, la paille est aussi mal broyée car les rotors sont trop grands en diamètre.

Dans une faucheuse à herbe, l'entraînement de chaque rotor de coupage des végétaux se fait par des couteaux placés au dessus du carter. Ce dit carter est au contact du sol et entraîné par une multitudes de pignon.

Ce dispositif fonctionne en sens inverse de mon invention exemple définis dans les documents FR 2.830.167.

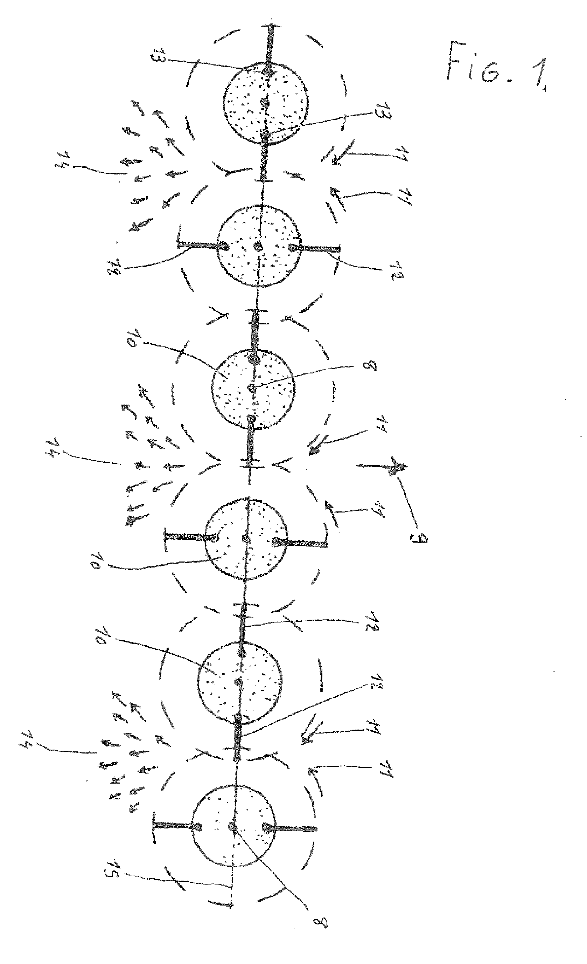

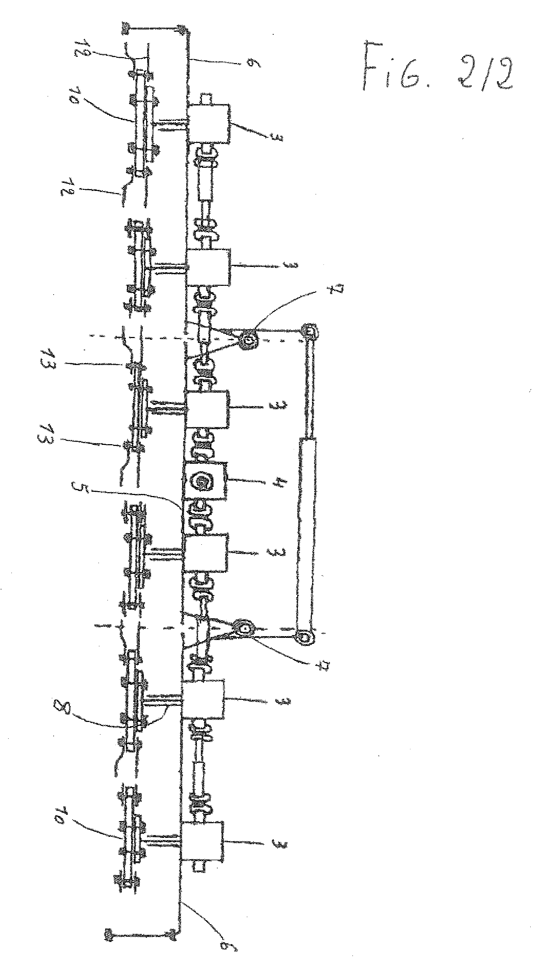

Mon invention consiste à fixer six boîtiers (3) fig 2 à axe vertical sur trois châssis, un central (5) fixé au tracteur et deux autres (6) repliables aux extrémités et fixés par des articulations (7) au châssis central (5). Tous les axes (8) de boîtiers (3) fig 1 sont positionnés sur une même ligne droite (15) fig 1 perpendiculaire au sens d'avancement (9) du tracteur fig 1. Chacun des châssis comporte deux boîtiers. L'ensemble des six boîtiers (3) est entraîné par un boîtier central (4) fig 2 et relié directement au tracteur par une transmission. En dessous des six boîtiers (3) et sur chacun d'eux sont fixés les six rotors (10) fig 1 et 2. Le sens de rotation des six rotors (10) est opposé deux par deux et déterminé suivant les flèches (11) fig 1 pour fonctionner par paire et propulser ainsi le produit l'un vers l'autre. Sur chaque rotor (10) sont fixés deux paires de couteaux (12) fig 1 et 2 montés sur axe pivotant (13) et positionnés face à face. Chaque rotor (10) est synchronisé pour permettre aux couteaux (12) de pouvoir se croiser sans se heurter. Tous les rotors (10) sont d'un petit diamètre ce qui améliore le broyage.

La projection du produit se fait au centre de chacun des châssis, elle se fait en trois zones équilibrées (14) fig 1, une sur le châssis central (5) et les deux autres à égales distances ce qui permet d'obtenir une projection (14) équilibrée et donc une très bonne répartition sur le sol.

## Revendications

1. Dispositif de broyage de paille et résidus de végétaux **caractérisé par** six rotors (10) entraînas et fixés à six boîtiers (3) placés au dessus des rotors (10) et disposés sur une même ligne droite (15) perpendiculaires au sens d'avancement (9) du tracteur.

2. Dispositif selon la revendication 1 **caractérisé par** six rotors (10) tous synchronisés avec un de rotation opposé deux par deux (11) chaque rotor (10) dispose de deux hauteurs de couteaux escamotables (12) qui propulsent le produit dans le des flèches (11)

3. Dispositif selon la revendication 1 **caractérisé par** six boîtiers fixés sur trois châssis, un central (5) et deux autres placés à chacune des deux extrémités repliables (6).

4. Dispositif selon l'une quelconque des revendications précédentes **caractérisé par** trois zones de projection du produit (14) placée au centre de chacun des châssis.
